# EUROPEAN PATENT SPECIFICATION

(11) **EP 3 741 693 B1**
(45) Date of publication and mention of the grant of the patent: **03.01.2024**
(21) Application number: 20185264.7
(22) Date of filing: 13.11.2017
(51) Int. Cl.: B65B 55/18, A01N 59/00, B65B 25/00, B65D 25/14, B65D 85/72

(54) **ANTIMICROBIAL GAS RELEASING AGENTS AND SYSTEMS AND METHODS FOR USING THE SAME**
ANTIMIKROBIELLE GASFREISETZENDE STOFFE UND SYSTEME UND VERFAHREN ZU DEREN NUTZUNG
AGENTS ET SYSTÈMES DÉGAGEANT DES GAZ ANTIMICROBIENS ET PROCÉDÉ POUR LEUR EMPLOI

(30) Priority: 13.11.2016 US 201662421348 P
(43) Date of publication of application: 25.11.2020
(62) Divisional of application: 17805366.6
(73) Proprietor: CSP Technologies, Inc., Auburn AL 36832 (US)
(72) Inventor: FREEDMAN, Jonathan R., Auburn, AL 36830 (US); GUPTA, Deepti S., Glenn Allen, VA 23059 (US); JOHNSTON, Michael A., Marietta, GA 30060 (US); BELFANCE, John, Phenix City, AL 36867 (US)
(74) Representative: Maiwald GmbH

(56) References cited:
- WO-A1-96/39200
- WO-A1-99/61005
- WO-A1-03/013843
- WO-A1-2005/041660
- WO-A1-2014/172543
- WO-A1-2017/031349

## Description

### BACKGROUND OF THE INVENTION

### 1. Field of the Invention

This invention relates to an entrained polymer, containers comprising said entrained polymer, and methods using said containers, useful for reducing and preventing the growth of microbes, or for killing microbes, within an interior space of a container and/or on product/good that is stored in the container. The entrained polymer is entrained with an antimicrobial releasing agent, namely a chlorine dioxide gas releasing agent.

### 2. Description of Prior Art

There are many items that are preferably stored, shipped and/or utilized in an environment that must be controlled and/or regulated. For example, in the moisture control field, containers and/or packages having the ability to absorb excess moisture trapped therein have been recognized as desirable. Likewise, in packaging products that carry a risk of contamination, e.g., food, it may be desirable to control the growth and proliferation of microbes.

Food products, particularly sliced or cut fresh foodstuffs such as meat, poultry, fruit, and vegetables are typically stored and sold in a supporting container, e.g., tray, that is overwrapped by a transparent plastic film, enabling visual inspection of the food products. These food products generally produce an exudate (i.e., juices), which can be a source for the growth of microbial agents. In addition, contamination of processing equipment or other surfaces with which the food products come into contact may remain with the food and proliferate while packaged. Similarly, food products may be contaminated even before the packaging process. For example, a tomato may have an opening in its skin through which unwanted microorganisms enter and replicate. Breakdown in the food handling process and/or cold chain management (e.g., refrigeration during food transport breaks for several hours) can allow microbial growth of contaminated food, potentially leading to outbreaks of food borne illness. Regardless of the source or nature of microbial contamination in food, the shelf-life and safety of the contaminated food products is affected by contamination and proliferation of microbes.

One way that the food industry has addressed preservation of foodstuffs is by including food grade preservatives as a component of the food, such as potassium sorbate, sodium benzoate and nitrites. However, such preservatives are regarded by some in the health field and consumers as being unnatural and presenting health risks. Moreover, it is not practical to use such preservatives with non-processed foods, for example fresh fruits or vegetables.

Another way that the food industry has addressed food preservation is to utilize antimicrobial agents that directly contact the food as a component in packaging material. However, such direct contact may be undesirable in some applications.

For certain applications, it is desirable to provide antimicrobial agents to release antimicrobial gas into a headspace of the food product package or container to control the growth of microbes, as compared to a solid or liquid component that requires direct contact with the stored food in order to be effective. However, there are challenges with providing the antimicrobial gas in the headspace. One such challenge is attaining a desired release profile of antimicrobial gas within the headspace during a designated time period. Failure to attain the appropriate release profile for a given product may result in a failure to achieve the desired shelf life for that product. Thus, there exists a need for improved delivery of antimicrobial agents to control, reduce and substantially destroy microbial contamination in food packaging as well as other applications, such as packaging of sterilized disposable medical devices. A challenge in meeting this need is maintaining a balance between providing sufficient antimicrobial gas in the package headspace to effectively control and/or kill pathogens while not "overdosing" the package headspace, which could adversely affect the quality of the product, e.g., by organoleptic degradation.
WO 2017/031349 describes a multilayer medical packaging film including a first layer and a chlorine dioxide-producing layer, the latter including a polymer composition and a plurality of chlorite ions.

### SUMMARY OF THE INVENTION

Accordingly, in one aspect, the invention provides an entrained polymer, the entrained polymer comprising:
(a) a base polymer selected from polypropylene, polyethylene, polyisoprene, polybutadiene, polybutene, polysiloxane, polycarbonate, polyamide, ethylene-vinyl acetate copolymer, ethylene-methacrylate copolymer, poly(vinyl chloride), polystyrene, polyester, polyanhydride, polyacrylonitrile, polysulfone, polyacrylic ester, polyurethane, polyacetal, or a copolymer or mixture thereof;
(b) a channeling agent, wherein the entrained polymer features channels through the base polymer formed of the channeling agent, and wherein the channeling agent is a poly glycol (for example, a polyethylene glycol (PEG)), ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene-vinyl acetate, nylon 6, nylon 66, or a combination thereof; and
(c) a chlorine dioxide gas releasing agent comprising an alkaline chlorite, wherein release of the chlorine dioxide gas is activated by contact of the entrained polymer with moisture.

In another aspect, the invention provides a method for inhibiting or preventing the growth of microbes or for killing microbes on a good in the interior space of a closed container. The method includes providing an entrained polymer according to the invention. The container includes a bottom surface, a top opening, one or more sidewalls extending in a vertical direction from the bottom surface to the top opening, an interior space formed by the one or more sidewalls, a headspace formed by the interior space that is not occupied by the good, and a cover to close and/or seal the container. The method further includes positioning the at least one entrained polymer article within the interior space of the container; placing the good in the container; covering the container; presenting the moisture in the interior space of the container; and releasing the chlorine dioxide gas within the interior space in a concentration effective for reducing or preventing the growth of microbes or for killing microbes present on the good.

In another aspect, a package is provided for inhibiting or preventing growth of microbes or for killing microbes in a closed container having a product located therein. The package is a container defining an interior space therein. A product (optionally a food product) is provided within the interior space. A headspace is formed within a volume of the interior space that is not occupied by the product. The entrained polymer according to the invention is disposed within the interior space, the chlorine dioxide releasing agent releasing chlorine dioxide gas into the headspace by reaction of moisture with the chlorine dioxide gas releasing agent. The chlorine dioxide gas releasing agent is optionally provided in an amount that releases the chlorine dioxide gas to provide a headspace concentration of from 10 parts per million (PPM) to 35 PPM for a period of 16 hours to 36 hours, optionally from 15 PPM to 30 PPM for a period of 16 hours to 36 hours, optionally from 15 PPM to 30 PPM for a period of about 24 hours.

Optionally, in any embodiment, when the product is provided within the interior space, the product is contaminated by at least one type of pathogen. The chlorine dioxide gas releasing agent provides a controlled release of chlorine dioxide gas to effectuate, after a span of 13 days from when the product is provided within the interior space and under storage conditions of 7° C, at least a 2 log base 10 reduction in colony forming units per gram (CFU/g), optionally at least a 3 log base 10 reduction in CFU/g, of the at least one type of pathogen, optionally at least a 4 log base 10 reduction in CFU/g, of the at least one type of pathogen. Optionally, the at least one pathogen is Salmonella, E. Coli, Listeria and/or Geotrichum.

Optionally, if the product is a food product and the amount of chlorine dioxide gas releasing agent and/or chlorine dioxide gas is present in an amount sufficient to effectuate the at least 2 log base 10 reduction in CFU/g, (or at least 3 log base 10 or 4 log base 10 reduction in CFU/g), of the at least one type of pathogen, such efficacy does not come at the expense of organoleptic degradation of the food product. For example the food product is not bleached or otherwise discolored.

Optionally, in any embodiment, the chlorine dioxide gas releasing agent is provided in at least one entrained polymer article located within the interior space, wherein the entrained polymer is an entrained polymer according to the invention. Preferably, such entrained polymer article is provided as a film having a thickness of from 0.1 mm to 1.0 mm, preferably from 0.2 mm to 0.6 mm, optionally about 0.3 mm. Preferably, such film is provided above the midline (preferably at least 2/3 or 3/4) of the container sidewalls, which inventors have found helps to attain a desired chlorine dioxide gas release profile.

Optionally, in any embodiment, the chlorine dioxide gas releasing agent is a powdered mixture comprising the alkaline metal chlorite, preferably sodium chlorite. Optionally, the powdered mixture further comprises at least one catalyst, optionally sulfuric acid clay, and at least one humidity trigger, optionally calcium chloride.

In one embodiment, the invention provides a method for inhibiting or preventing the growth of microbes or for killing microbes on a good in the interior space of a closed container, the good being a food product. The method includes providing a closed container defining an interior space therein and a food product within the interior space. A headspace is formed within a volume of the interior space that is not occupied by the product. An entrained polymer according to the invention is provided in the interior space. The chlorine dioxide gas releasing agent releases chlorine dioxide gas into the headspace by reaction of moisture with the chlorine dioxide gas releasing agent. The chlorine dioxide gas releasing agent is provided in an amount sufficient to release the chlorine dioxide gas to provide a desired headspace concentration of the chlorine dioxide gas over a predetermined amount of time. According to the method, if the product is contaminated by at least one type of pathogen at the time the product is provided within the interior space, the chlorine dioxide gas releasing agent optionally provides a controlled release of chlorine dioxide gas to effectuate, after a span of 13 days under storage conditions of 7° C, at least a 2 log base 10 reduction in CFU/g, optionally at least a 3 log base 10 reduction in CFU/g, optionally at least a 4 log base 10 reduction in CFU/g, of the at least one type of pathogen. Preferably, this method effectuates the reduction without causing organoleptic degradation of the food product, for example without bleaching or otherwise causing discoloration of the food product. Preferably, the chlorine dioxide gas releasing agent is provided in an entrained polymer film as described herein.

In any embodiment of a package described herein, an aspect of the invention may include use of the package for storing a food product, wherein the food product exudes moisture that activates the chlorine dioxide gas releasing agent to release chlorine dioxide gas in the headspace. This use may attain desired headspace chlorine dioxide gas concentrations as described herein. This use may effectuate, after a span of 13 days from when the product is provided within the interior space and under storage conditions of 7° C, at least a 2 log base 10 reduction in colony forming units per gram (CFU/g), optionally at least a 3 log base 10 reduction in CFU/g, optionally at least a 4 log base 10 reduction in CFU/g, of the at least one type of pathogen. This is preferably done without causing organoleptic degradation of the food product, for example without bleaching or otherwise discoloring the food product.

### BRIEF DESCRIPTION OF THE DRAWINGS

The invention will be described in conjunction with the following drawings in which like reference numerals designate like elements and wherein:
FIG. 1 is a perspective view of a plug formed of an entrained polymer according to an embodiment of the present invention.
FIG. 2 is a cross section taken along line 2-2 of FIG. 1;
FIG. 3 is a cross section similar to that of FIG. 2, showing a plug formed of another embodiment of an entrained polymer according to the present invention;
FIG. 4 is a schematic illustration of an entrained polymer according to an embodiment of the present invention, in which the chlorine dioxide gas releasing material that is activated by contact with moisture.
FIG. 5 is a cross sectional view of a sheet or film formed of an entrained polymer according to an embodiment of the present invention, adhered to a barrier sheet substrate.
FIG. 6 is a cross section of a package that may be formed using an entrained polymer according to an embodiment of the present invention.
FIG. 7 is a perspective view of an exemplary package incorporating entrained polymer films according to an embodiment of the present invention.
FIGS. 8A and 8B are plots comparing Geotrichum Growth on contaminated tomatoes stored in packages respectively with and without use of entrained polymer film according to the invention.
FIG. 9 is a plot showing the measured amount of ClO₂ (chlorine dioxide) provided within a headspace of a container including entrained polymer film according to the invention.
FIG. 10 is a plot showing the measured amount of ClO₂ provided within a headspace of a container including an entrained polymer film according to the invention positioned at varying heights on the sidewall.
FIG. 11 is a plot showing the log CFU/gram reduction in *Salmonella* for foodstuff stored in containers with an entrained polymer film according to the invention being positioned therein, as compared to containers absent of the entrained polymer film.
FIG. 12 is a plot showing the log CFU/gram reduction in *E. Coli* for foodstuff stored in containers with an entrained polymer film according to the invention being positioned therein, as compared to containers absent of the entrained polymer film.
FIG. 13 is a plot showing the log CFU/gram reduction in *Listeria* for foodstuff stored in containers with an entrained polymer film according to the invention being positioned therein as compared to containers absent of the entrained polymer film.
FIG. 14 is a plot showing the measured amounts of ClO₂ provided within a headspace of a container depending on the amount of entrained polymer film according to the invention provided in the container.

### DETAILED DESCRIPTION OF PREFERRED EMBODIMENTS

### Definitions

As used herein, the term "active agent" is defined as chlorine dioxide gas releasing agent comprising an alkaline chlorite, wherein release of the chlorine dioxide gas is activated by contact of the entrained polymer with moisture. The active agent is a material that is preferably immiscible with the base polymer and when mixed and heated with the base polymer and the channeling agent, will not melt, i.e., has a melting point that is higher than the melting point for either the base polymer or the channeling agent.

The term "chlorine dioxide gas releasing agent" refers to an active agent that is capable of releasing chlorine dioxide gas. This active agent includes an alkaline chlorite as active component, and may include other components (such as a catalyst and trigger) in a formulation (e.g., powdered mixture) configured to release the antimicrobial gas chlorine dioxide. Chlorine dioxide gas is a compound that inhibits or prevents the growth and proliferation of microbes or kills microbes. The chlorine dioxide gas is released by the chlorine dioxide gas releasing agent. The chlorine dioxide gas releasing agent is triggered by contact with moisture, which reacts with the chlorine dioxide gas releasing agent to cause the agent to release chlorine dioxide gas.

As used herein, the term "base polymer" is a polymer optionally having a water vapor transmission rate that is substantially lower than, lower than or substantially equivalent to that of the channeling agent, because the chlorine dioxide gas releasing agent is an chlorine dioxide gas releasing agent that is activated by moisture. This agent includes an alkaline chlorite and may include other components in a formulation configured to release the antimicrobial gas chlorine dioxide. The primary function of the base polymer is to provide structure for the entrained polymer.

In certain embodiments, the channeling agent has a water vapor transmission rate of at least two times that of the base polymer. In other embodiments, the channeling agent has a water vapor transmission rate of at least five times that of the base polymer. In other embodiments, the channeling agent has a water vapor transmission rate of at least ten times that of the base polymer. In still other embodiments, the channeling agent has a water vapor transmission rate of at least twenty times that of the base polymer. In still another embodiment, the channeling agent has a water vapor transmission rate of at least fifty times that of the base polymer. In still other embodiments, the channeling agent has a water vapor transmission rate of at least one hundred times that of the base polymer.

As used herein, the term "channeling agent" or "channeling agents" is defined as a material that is immiscible with the base polymer and has an affinity to transport a gas phase substance at a faster rate than the base polymer. A channeling agent is capable of forming channels through the entrained polymer when formed by mixing the channeling agent with the base polymer. Such channels are capable of transmitting moisture through the entrained polymer at a faster rate than in solely the base polymer.

As used herein, the term "channels" or "interconnecting channels" is defined as passages formed of the channeling agent that penetrate through the base polymer and may be interconnected with each other.

As used herein, the term "entrained polymer" is defined as a monolithic material formed of at least a base polymer with a chlorine dioxide gas releasing agent and a channeling agent entrained or distributed throughout.

As used herein, the term "monolithic material" is defined as a material that does not consist of two or more discrete macroscopic layers or portions. Accordingly, a "monolithic material" does not include a multi-layer composite.

Furthermore, the terms "package," "packaging" and "container" may be used interchangeably herein to indicate an object that holds or contains a good, e.g., food product and foodstuffs. Optionally, a package may include a container with a product stored therein. Examples of a package, packaging and container include a tray, box, carton, bottle receptacle, vessel, pouch and flexible bag. A pouch or flexible bag may be made from, e.g., polypropylene or polyethylene. The package or container may be closed, covered and/or sealed using a variety of mechanisms including a cover, a lid, lidding sealant, an adhesive and a heat seal, for example. The package or container is composed or constructed of various materials, such as plastic (e.g., polypropylene or polyethylene), paper, Styrofoam, glass, metal and combinations thereof. In one embodiment, the package or container is composed of a rigid or semi-rigid polymer, optionally polypropylene or polyethylene, and preferably has sufficient rigidity to retain its shape under gravity.

### Exemplary Entrained Polymers

Conventionally, desiccants, oxygen absorbers and other active agents have been used in raw form, e.g., as loose particulates housed in sachets or canisters within packaging, to control the internal environment of the package. For many applications, it is not desired to have such loosely stored active substances. Thus, the present application provides active entrained polymers comprising active agents, wherein such polymers can be extruded and/or molded into a variety of desired forms, e.g., container liners, plugs, film sheets, pellets and other such structures. Such active entrained polymers include channeling agents, such as polyethylene glycol (PEG), which form channels between the surface of the entrained polymer and its interior to transmit moisture to the entrained active agent. Entrained polymers are described, for example, in U.S. Pat. Nos. 5,911,937, 6,080,350, 6,124,006, 6,130,263, 6,194,079, 6,214,255, 6,486,231, 7,005,459, and U.S. Pat. Pub. No. 2016/0039955.

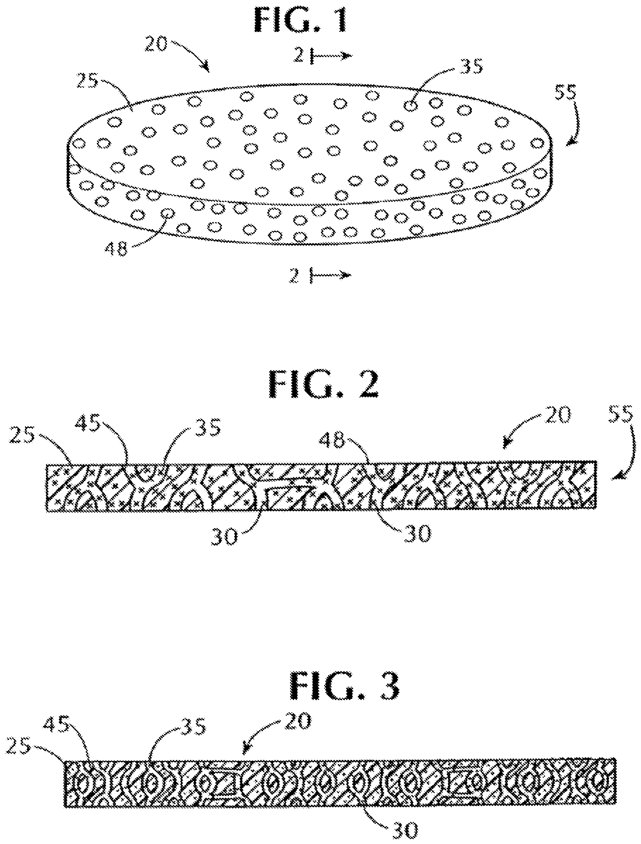

Figs. 1-6 illustrate exemplary entrained polymers 20 and various packaging assemblies formed of entrained polymers according to embodiments of the invention. The entrained polymers 20 each include a base polymer 25, a channeling agent 35 and an active agent 30. As shown, the channeling agent 35 forms interconnecting channels 45 through the entrained polymer 20. At least some of the active agent 30 is contained within these channels 45, such that the channels 45 communicate between the active agent 30 and the exterior of the entrained polymer 20 via channel openings 48 formed at outer surfaces of the entrained polymer 25. The active agent 30 is a chlorine dioxide gas releasing agent as defined herein.

Suitable channeling agents include polyglycol such as polyethylene glycol (PEG), ethylene-vinyl alcohol (EVOH), polyvinyl alcohol (PVOH), glycerin polyamine, polyurethane and polycarboxylic acid including polyacrylic acid or polymethacrylic acid. Alternatively, the channeling agent 35 can be, for example, a water insoluble polymer, such as a propylene oxide polymerisate-monobutyl ether, which is commercially available under the trade name Polyglykol B01/240, produced by CLARIANT. In other embodiments, the channeling agent could be a propylene oxide polymerisate monobutyl ether, which is commercially available under the trade name Polyglykol B01/20, produced by CLARIANT, propylene oxide polymerisate, which is commercially available under the trade name Polyglykol D0 1/240, produced by CLARIANT, ethylene vinyl acetate, nylon 6, nylon 66, or any combination of the foregoing.

Entrained polymers with chlorine dioxide gas releasing agents are further described below.

### Chlorine Dioxide Gas Releasing Agents and Entrained Polymer Formulations Incorporating the Same

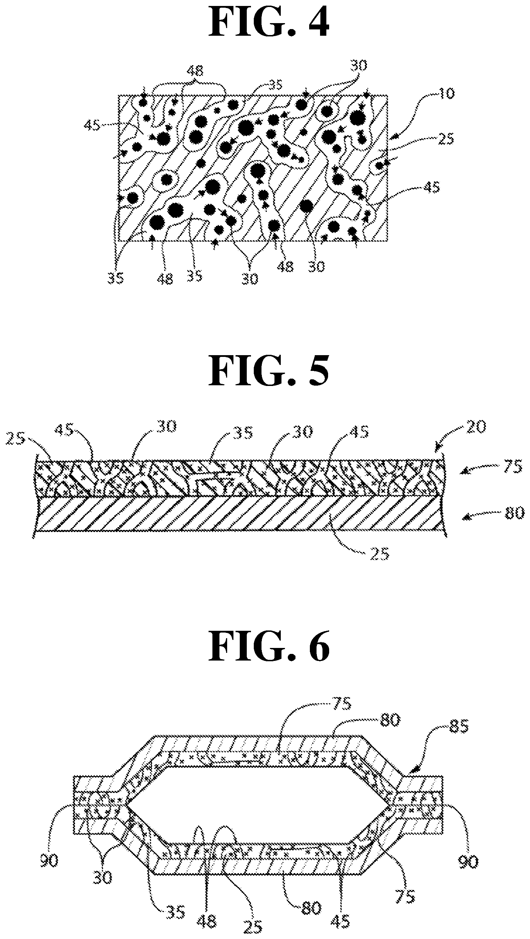

FIG. 4 illustrates an embodiment of an entrained polymer 10 according to the invention, in which the active agent 30 is a chlorine dioxide gas releasing agent. The arrows indicate the path of moisture from an exterior of the entrained polymer 10, through the channels 45, to the particles of chlorine dioxide gas releasing agent 30. The chlorine dioxide gas releasing agent reacts with or is otherwise triggered or activated by the moisture and in response releases chlorine dioxide gas.

As will be discussed in greater detail below, the chlorine dioxide gas releasing agent is generally used in a closed system so that the released chlorine dioxide gas does not escape. Chlorine dioxide gas-releasing agents are, e.g., a combination of sodium chlorite, a catalyst and a trigger.

Preferred features of chlorine dioxide gas releasing agents used according to the present invention include any one or more of the following characteristics: (1) they volatize at refrigerated temperatures; (2) they are food safe and edible in finished form; (3) they may be incorporated safely into an entrained polymer formulation or other mechanism for release; (4) they are shelf stable in long term storage conditions; (5) they release the released chlorine dioxide gas only once a package in which the chlorine dioxide gas releasing agent is disposed, is sealed with product disposed in the package; (6) they do not affect a stored food product organoleptically when they are formulated and configured to achieve a desired release profile within the package; and (7) they are preferably acceptable under applicable governmental regulations and/or guidelines pertaining to food packaging and finished food labeling.

### Chlorine Dioxide Releasing Agents

In the present invention, the antimicrobial releasing agents are agents that release chlorine dioxide (ClO₂) in gas form as the released antimicrobial material. The chlorine dioxide gas releasing agent is a compound or formulation comprising an alkaline chlorite, such as, e.g. sodium chlorite or potassium chlorite, and optionally a catalyst and a trigger (e.g., in the form of a powder) which in combination are triggered or activated by moisture to cause the agent to release chlorine dioxide. One exemplary chlorine dioxide gas releasing agent is provided under the brand ASEPTROL 7.05 by BASF Catalysts LLC. This material and preparation of the same is described in U.S. Pat. No. 6,676,850. Example 6 of the aforementioned patent describes a formulation that is particularly suitable as an chlorine dioxide gas releasing agent.

A suitable chlorine dioxide gas releasing agent, which is based on Example 6 of U.S. Pat. No. 6,676,850 and is configured to release chlorine dioxide gas upon activation by moisture, may be prepared as follows.

The chlorine dioxide gas releasing agent includes a formulation comprising sodium chlorite (as the active component), a base catalyst and a trigger. The catalyst and trigger preparations are made separately, then combined together and ultimately combined with the sodium chlorite.

The base catalyst is optionally made by first preparing a 25-30 wt. % sodium silicate solution (SiO₂:Na₂O proportion of 2.0 to 3.3 by weight). That solution is mixed into an aqueous slurry of 28-44 wt. % Georgia Kaolin Clay (particle size diameter of about 80% less than one micrometer), wherein the sodium silicate solution is 2 wt. % of the slurry. The slurry is oven dried at 100°C to generate agglomerates or microspheres of about 70 µm in size. 300 g of these microspheres are impregnated with 280 g of 2.16 N sulfuric acid solution. That mixture is then dried at 100°C. Next, the dried mixture undergoes a calcine process at 350°C for 3 hours, followed by an additional calcine process at 300°C in a sealed glass jar with the seal wrapped with tape. This mixture forms the base catalyst.

Next, 84.6 g of the base catalyst are mixed with 10.1 g of the trigger, dry calcium chloride. This base catalyst and trigger mixture is ground with mortar and pestle at ambient room temperature. This mixture is dried for 2 hours at 200°C. The base catalyst and trigger mixture is then cooled to room temperature in a sealed glass jar with tape wrapped around the seal.

Finally, the base catalyst and trigger mixture is combined with 5.3 g of sodium chlorite (which is the active component of the active agent). The full mixture is then ground with mortar and pestle at ambient room temperature, thus forming an embodiment of a chlorine dioxide gas releasing agent. The chlorine dioxide gas releasing agent is then deposited in a sealed glass jar with tape wrapped around the seal to preserve it and keep it essentially free of moisture, which would prematurely activate it (to release chlorine dioxide gas).

Optionally, the entrained polymer comprises the active agent in an amount of 40%-70% by weight.
Optionally, the entrained polymer is in the form of a film disposed within sealed packaging containing fresh foodstuffs, e.g., meat or produce.

It is generally believed that the higher the chlorine dioxide gas releasing agent concentration in an entrained polymer mixture, the greater the releasing capacity of the final composition. However, too high an active agent concentration may cause the entrained polymer to be too brittle. This may also cause the molten mixture of active agent, base polymer and channeling agent to be more difficult to either thermally form, extrude or injection mold. In one embodiment, the chlorine dioxide gas releasing agent loading level or concentration can range from 10% to 80%, preferably 40% to 70%, more preferably from 40% to 60%, and even more preferably from 45% to 55% by weight with respect to the total weight of the entrained polymer. Optionally, the channeling agent may be provided in a range of 2% to 10% by weight, preferably about 5% by weight. Optionally, the base polymer may range from 10% to 50% by weight of the total composition, preferably from 20% to 35% by weight. Optionally, a colorant is added, e.g., at about 2% by weight of the total composition.

In one embodiment, an entrained polymer may be a formulation including 50% by weight of ASEPTROL 7.05 chlorine dioxide gas releasing agent in the form of the powdered mixture, 38% by weight ethyl vinyl acetate (EVA) as a base polymer and 12% by weight polyethylene glycol (PEG) as a channeling agent.

FIG. 1 shows a plug 55 constructed of an entrained polymer 20, in accordance with certain embodiments of the invention. The plug 55 may be placed inside of a container. As aforementioned, the entrained polymer 20 includes a base polymer 25, a channeling agent 35 and a chlorine dioxide gas releasing agent (active agent) 30.

FIG. 2 shows a cross-sectional view of the plug 55 shown in FIG. 1. In addition, FIG. 2 shows that the entrained polymer 20 has been solidified such that the channeling agent 35 forms interconnecting channels 45 to establish passages throughout the solidified plug 55. At least some of the active agent 30 is contained within the channels 45, such that the channels 45 communicate between the active agent 30 and the exterior of the entrained polymer 20 via channel openings 48 formed at outer surfaces of the entrained polymer 25.

FIG. 3 illustrates an embodiment of a plug 55 having similar construction and makeup to the plug 55 of FIG. 2, where interconnecting channels 45 are finer as compared to those shown in FIG. 2. This can result from the use of a dimer agent (i.e., a plasticizer) together with a channeling agent 35. The dimer agent may enhance the compatibility between the base polymer 25 and the channeling agent 35. This enhanced compatibility is facilitated by a lower viscosity of the blend, which may promote a more thorough blending of the base polymer 25 and channeling agent 35, which under normal conditions can resist combination into a uniform solution. Upon solidification of the entrained polymer 20 having a dimer agent added thereto, the interconnecting channels 45 which are formed therethrough have a greater dispersion and a smaller porosity, thereby establishing a greater density of interconnecting channels throughout the plug 55.

Interconnecting channels 45, such as those disclosed herein, facilitate transmission of a desired material, such as moisture or gas, through the base polymer 25, which generally acts as a barrier to resist permeation of these materials. For this reason, the base polymer 25 itself acts as a barrier substance within which an active agent 30 may be entrained. The interconnecting channels 45 formed of the channeling agent 35 provide pathways for the desired material to move through the entrained polymer 10. Without these interconnecting channels 45, it is believed that relatively small quantities of the desired material would be transmitted through the base polymer 25 to or from the active agent 30. Additionally, wherein the desired material is transmitted from the active agent 30, it is released from the active agent 30, i.e. it is chlorine dioxide gas.

FIG. 5 illustrates an active sheet or film 75 formed of the entrained polymer 20 used in combination with a barrier sheet 80 to form a composite, according to an embodiment of the invention. The characteristics of the active sheet 75 are similar to those described with respect to the plug 55 shown in FIGs. 1 and 2. The barrier sheet 80 may be a substrate such as foil and/or a polymer (such as a container wall) with low moisture or oxygen permeability. The barrier sheet 80 is compatible with the active sheet 75 and thus, is configured to thermally bond to the active sheet 75, when the active sheet 75 solidifies after dispensing. FIG. 6 illustrates an embodiment in which the two sheets 75, 80 are combined to form a packaging wrap having active characteristics at an interior surface formed by the entrained polymer 20/active sheet 75, and vapor resistant characteristics at an exterior surface formed by the barrier sheet 80.

In one embodiment, the sheets 75, 80 of FIG. 5 are joined together to form an active package 85, as shown in FIG. 6. As shown, two laminates or composites are provided, each formed of an active sheet 75 joined with a barrier sheet 80. The sheet laminates are stacked, with each active sheet 75 facing the other, so as to be disposed on an interior of the package, and are joined at a sealing region 90, formed about a perimeter of the sealed region of the package interior.

Optionally, in any of the foregoing embodiments, the antimicrobial entrained polymer is in the form of a film that is disposed within a sealed food package. Optionally, the film may be adhered, e.g., using an adhesive, to an inner surface of the package. Alternatively, the film may be heat staked (without an adhesive) to the inner surface of the package. The process of heat staking film onto a substrate is known in the art and described in detail in U.S. Pat. No. 8,142,603. The size and thickness of the film can vary. In certain embodiments, the film has a thickness of approximately 0.3 mm. Optionally, the film may range from 0.1 mm to 1.0 mm, more preferably from 0.3 mm to 0.6 mm.

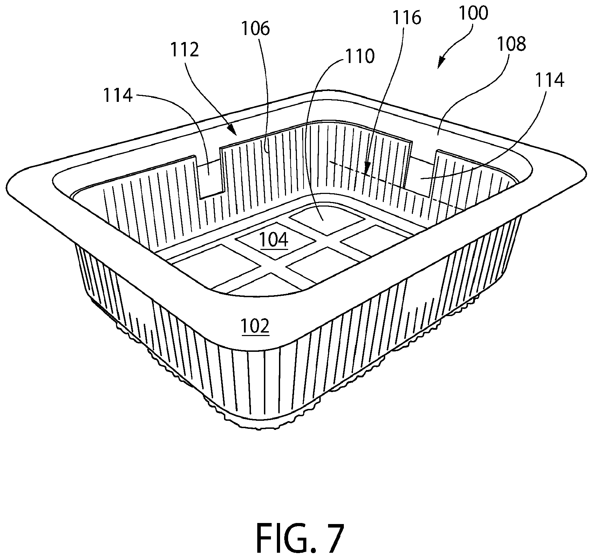

FIG. 7 shows a package 100 for storing fresh foodstuffs, e.g., produce or meat, in accordance with certain embodiments of the invention. The package 100 is shown in the form of a plastic tray 102. Although, other forms and materials are also contemplated as being within the scope of the invention. The tray 102 comprises a base 104, and sidewalls 106 extending vertically from the base 104 leading to a tray opening 108. The base 104 and sidewalls 106 together define an interior 110, e.g. for holding and storing fresh produce. The package 100 also includes a flexible plastic lidding film 112, which is disposed over and seals the opening 108. It is contemplated and understood that a wide variety of covers or lids may be used to close and seal the opening 108. Optionally, the cover or lid is transparent, such that the interior can be viewed. When a product (e.g., sliced tomatoes) is stored within the interior 110, empty space surrounding and above the product is herein referred to as "headspace" (not shown).

The package 100 further includes sections of antimicrobial entrained polymer film 114 disposed on the sidewalls 106. In the embodiment shown, there are four sections of such film 114, one section of film 114 per sidewall 106. The film 114 is preferably disposed at or near the top of the sidewall 106, proximal to the opening 108. At least a portion, although preferably most or all of each of the film sections 114 protrude above the midline 116 of the sidewall 106, the midline 116 being centrally located between the base 104 and the opening 108. It has been found that film placement at or towards the top of the package 100 has an effect on efficacy of the film sections 114, as such placement facilitates desirable distribution of released chlorine dioxide gas into the headspace of the package 100. Placing the entrained polymer at too low of a height above the base 104, or beneath the food in the package, has been found not to provide desirable distribution of the released chlorine dioxide gas in the headspace. If placement mass transfer of the chlorine dioxide gas is not optimal, some of the food product/good will not be adequately protected against the growth of microbes. Additionally, the food may undesirably react with and/or absorb the released chlorine dioxide gas. As explained further below, it has been found that placing the film above the midline of the sidewall, preferably at a height of at least 67% or 75% or about 80% of the sidewall, facilitates achieving a desired chlorine dioxide gas release profile and headspace concentration.

Optionally, the entrained polymer film 114 is heat staked to the package (e.g., on the sidewall as described and shown vis-à-vis Fig. 7). Advantageously, heat staking could allow the film to permanently adhere to the sidewall without use of an adhesive. An adhesive may be problematic in some circumstances because it may release unwanted volatiles in the food- containing headspace. Aspects of a heat staking process that may be used in accordance with optional embodiments of the invention are disclosed in U.S. Pat. No. 8,142,603, as referenced above. Heat staking, in this instance, refers to heating a sealing layer substrate on the sidewall while exerting sufficient pressure on the film and sealing layer substrate to adhere the film to the container wall.

In certain embodiments, the antimicrobial entrained polymer film 114 may be connected to the surface of the lidding film 112 (or a lid) that is inside of the container, in place of the film sections 114 on the sidewall(s) 106, or in addition thereto. Alternatively, the antimicrobial entrained polymer film 114 may be incorporated into the composition of the lidding film 112 (or a lid).

In addition to placement of the film 114, another important factor is the release profile of the released chlorine dioxide gas. As aforementioned, to ensure adequate shelf life, release of the chlorine dioxide gas must not all occur immediately; rather, release should be extended, sustained and predetermined to attain a desired shelf life.

In general, the polymer entrained with chlorine dioxide gas releasing agent is self-activating, meaning that release of the chlorine dioxide gas is not initiated until the chlorine dioxide gas releasing agent is exposed to the moisture. Typically, moisture is not present in the interior, e.g., headspace, of the container prior to a food product being placed inside of the container. Upon placement, the food product generates moisture that interacts with the chlorine dioxide gas releasing agent entrained in the polymer, to generate the chlorine dioxide gas in the headspace. In one embodiment, the container is sealed in a moisture tight manner to trap moisture within the container generated by moisture-exuding comestibles.

In certain embodiments, a controlled release and/or a desired release profile can be achieved by applying a coating to the active agent, e.g., using a spray coater, wherein the coating is configured to release the released antimicrobial agent within a desired time frame. The chlorine dioxide gas releasing agents may have different coatings applied thereon to achieve different release effects. For example, if a 14-day shelf life is desired, based on predetermined relative humidity of the package, the amount of moisture present to trigger the chlorine dioxide gas releasing agent may be determined. Based on this determination, the agent may be coated with extended release coatings of varying thicknesses and/or properties to achieve the desired release profile. For example, some active agent will be coated such that it will not begin releasing chlorine dioxide gas until after one week, while other active agent will begin release almost immediately. Spray coating technology is known in the art. For example, pharmaceutical beads and the like are spray coated to control the release rate of active ingredient, e.g., to create extended or sustained release drugs. Optionally, such technology may be adapted to apply coatings to the active agent to achieve a desired controlled rate of release of chlorine dioxide gas.

Alternatively, a controlled release and/or desired release profile may be achieved by providing a layer, optionally on both sides of the film, of a material configured to control moisture uptake into the entrained polymer (which in turn triggers release of the chlorine dioxide). For example, the film may include a polymer liner, made e.g., from low density polyethylene (LDPE) disposed on either side or both sides thereof. The thickness of the film and liner(s) can vary. In certain embodiments, the film is approximately 0.3 mm thick and the LDPE liners on either side are each approximately 0.02 mm to 0.04 mm thick. The LDPE liners may be coextruded with the film or laminated thereon.

Alternatively, a controlled release and/or desired release profile may be achieved by modifying the formulation of the trigger of the chlorine dioxide gas releasing agent. For example, the trigger, when contacted by moisture, liquefies and then reacts with the active component (e.g., sodium chlorite) to cause release of the chlorine dioxide gas. The trigger may be formulated to liquefy upon contact with moisture at different rates. The faster the trigger liquefies, the faster the release of chlorine dioxide gas and vice versa. In this way, modification of the trigger is yet another vehicle provide a desired release rate of chlorine dioxide gas.

Any combination of the aforementioned mechanisms may be utilized to achieve desired release rates and release profiles of chlorine dioxide gas within a container headspace.

### Varied Release Rates Depending on Nature of Stored Food Product

The inventors have discovered that the desired release profile of chlorine dioxide gas in a container headspace may vary depending on the nature of the product that is stored. For example, the inventors have found that foods having a high water content appear to require a high burst of antimicrobial gas followed by a drop in headspace concentration during the storage period while foods having a more modest water content appear to respond well to a relatively steady headspace concentration over the storage period.

Examples of food products that exude high amounts of moisture and that are more appropriately protected by a release profile having a quick burst of chlorine dioxide gas followed by a drop include sliced, diced or cut foods selected from the group consisting of: tomatoes, washed peppers, washed onions, water melon, honey dew, cantaloupe, strawberries, peaches, pineapple, oranges, seafood, meat and poultry. For such foods, an amount of the chlorine dioxide gas releasing agent is provided that releases the chlorine dioxide gas to preferably provide a headspace concentration of from 10 parts per million (PPM) to 35 PPM for a period of 16 hours to 36 hours, optionally from 15 PPM to 30 PPM for a period of 16 hours to 36 hours, optionally from 15 PPM to 30 PPM for a period of about 24 hours. Headspace concentration measurements may be obtained, for example, using a PORTASENS II gas detector from Analytical Technology, Inc. for readings taken with chlorine dioxide sensors placed within the package. The sensors may be one or more of 00-1004 Chlorine Dioxide, 0-1/5 PPM (2 PPM Std.), 00-1005 Chlorine Dioxide, 0-5/200 (20 PPM Std.) and 00-1359 Chlorine Dioxide, 0- 200/1000 PPM (1000 PPM Std.), which are also from Analytical Technology, Inc. and are compatible with the PORTASENS II gas detector.

This type of "quick burst" (headspace concentration of from 10 parts per million (PPM) to 35 PPM for a period of 16 hours to 36 hours) appears to be required so that the chlorine dioxide gas, which dissolves in water, can stay ahead of the dissolution curve to provide sufficient antimicrobial effect during the spike in headspace concentration, to improve the shelf life of contaminated food over an approximately two-week period. Notwithstanding the characterization of the release as "quick burst," it may still be considered controlled release because headspace concentration is still regulated to fall within a desired concentration over a given period, even if relatively "quick." The inventors have found, for example, that the aforementioned headspace concentrations works well to significantly reduce the microbial count of contaminated sliced tomatoes over about thirteen days without bleaching the tomatoes. This is borne out by examples provided below.

Examples of food products that exude moderate or low amounts of moisture are whole or minimally processed produce selected from the group consisting of: broccoli, brussel sprouts, cabbage, cucumbers, bananas, herbs, whole peppers, carrots, root vegetables and potatoes. For such foods, an amount of chlorine dioxide gas releasing agent releases the chlorine dioxide gas to preferably provide a headspace concentration of from 8 PPM to 15 PPM for a period of 13 days. Regardless of whether this exact headspace concentration is met, it is preferred that the chlorine dioxide gas releasing agents are provided in entrained polymer films, as described herein, for such low or moderate moisture exuding foods.

The aforementioned release profiles and headspace concentration assume the presence of moisture exuding food product in the package.

In either case (high moisture exuding or moderate/low moisture exuding foods), where the product is contaminated by at least one type of pathogen, the chlorine dioxide gas is provided in a headspace concentration over a determined time period to effectuate, after a span of 13 days from when the product is provided within the interior space and under storage conditions of 7°C, at least a 2 log base 10 reduction in colony forming units per gram (CFU/g), optionally at least a 3 log base 10 reduction in CFU/g, optionally at least a 4 log base 10 reduction in CFU/g of the at least one type of pathogen, without causing organoleptic degradation of the food product. Such organoleptic degradation may include bleaching or other discoloration of the food product.

Optionally, according to any embodiment, 700-950 mg of the chlorine dioxide gas releasing agent is effective when used in a 1L container having 1.25 lbs of tomatoes stored therein. It is contemplated that proportional adjustment of the mass of chlorine dioxide gas releasing agent may be done according to changes in container volume and amount/type of contents.

### Applications of Invention for Non-Edible Goods

The entrained polymers according to the invention may be used outside of food preservation applications. For example, they may be adapted for use in sterilization of disposable medical devices, i.e., to reduce the bioburden of such devices when they are packaged. The primary difference between preservation of fresh food and medical devices is shelf life. Preservation of fresh food implicates a shelf life measured in days or weeks while maintaining sterility of packaged medical devices requires a shelf life measured in months or years. Accordingly, the release profile over time for one application versus the other will necessarily vary.

The invention will be illustrated in more detail with reference to the following Examples, but it should be understood that the present invention is not deemed to be limited thereto.

### EXAMPLES

### Example 1 - Controlling Release of ClO₂ Gas

A storage temperature of 7°C was chosen to replicate a storage temperature that is slightly elevated above ideal storage temperature (or to simulate an inadvertent spike in temperature during storage, e.g., when refrigeration equipment breaks down for a few hours). Three packages similar to that shown in FIG. 7 were utilized in this experiment. All three included antimicrobial entrained polymer film sections placed substantially as shown in FIG. 7. The film was an entrained polymer film including an chlorine dioxide gas releasing agent in the form of a powdered mixture comprising sodium chlorite (which produces chlorine dioxide gas), sulfuric acid clay (as a catalyst) and calcium chloride (as a humidity trigger). This powdered mixture is sold commercially by BASF under the name ASEPTROL and is described above.

The formulation for the film itself was a formulation including 50% by weight of the aforementioned chlorine dioxide gas releasing agent in the form of the powdered mixture, 38% by weight ethyl vinyl acetate (EVA) as a base polymer and 12% by weight polyethylene glycol (PEG) as a channeling agent. This film formulation is described herein as X2597 and is considered one exemplary embodiment of an entrained polymer according to the invention. As described above, the chlorine dioxide gas releasing agent is triggered by moisture to release chlorine dioxide (ClO₂) gas as the released antimicrobial material. The film, as between the three packages, was the same formulation and dimensions. However, two of the films had external layers to control moisture uptake and one had no such layers. The film in Package A was sandwiched between coextruded layers of LDPE that were about 0.02 mm thick. The film in Package B was sandwiched between coextruded layers of LDPE that were about 0.04 mm thick. The film in Package C (the control) had no such polymer layers on either side of the film.

The ClO₂ levels in the packages were measured for 13 days with detection sensors calibrated for the desired concentration known to have an antimicrobial effect on most organisms. Results were as follows (values presented in ppm concentration of ClOz).

| **Day** | **Package A** | **Package B** | **Package C** |
|---|---|---|---|
| 1 | 24 | 17 | 34 |
| 2 | 27 | 22 | 43 |
| 3 | 28 | 21 | 29 |
| 4 | 27 | 21 | 27 |
| 5 | 28 | 20 | 26 |
| 6 | 29 | 20 | 25 |
| 7 | 26 | 21 | 18 |
| 8 | 21 | 21 | 12 |
| 9 | 17 | 19 | 9 |
| 10 | 13 | 17 | 4 |
| 11 | 11 | 16 | 4 |
| 12 | 8 | 13 | 4 |
| 13 | 6 | 11 | 4 |

This Example demonstrates that Package B had the steadiest and most consistent release profile, attributable to the thicker polymer liner sandwiching the antimicrobial film, which controlled moisture uptake into the film. The release profile of Package B may be desirable for certain applications, for example where the food product exudes a relatively modest amount of moisture, such as broccoli.

### Example 2 - Geotrichum Growth Testing

A common cause of rejects for quality of tomatoes is *Geotrichum candidum,* a yeast-like mold that grows as a white fuzz. In this example, sliced tomatoes deliberately tainted with *G. candidum* were packaged and subjected to testing. A storage temperature of 7°C was chosen to replicate a storage temperature that is slightly elevated above ideal storage temperature (or to simulate an inadvertent spike in temperature during storage, e.g., when refrigeration equipment breaks down for a few hours).

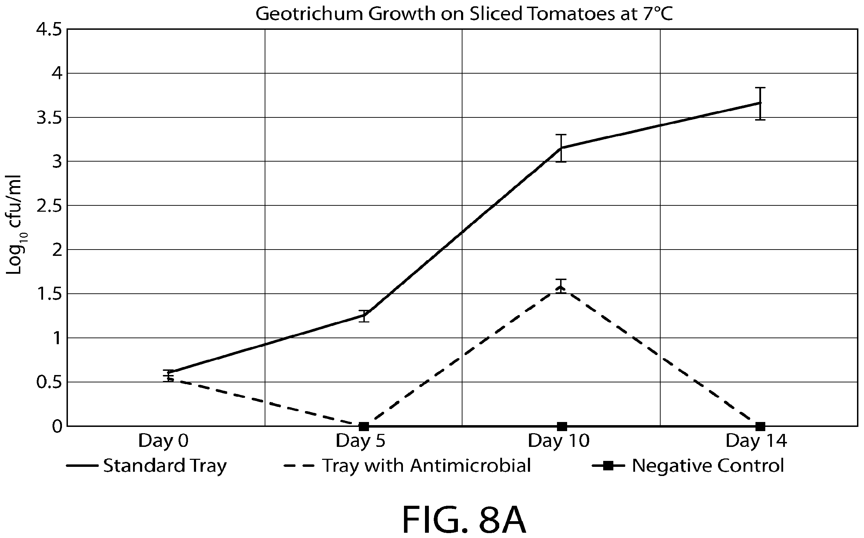

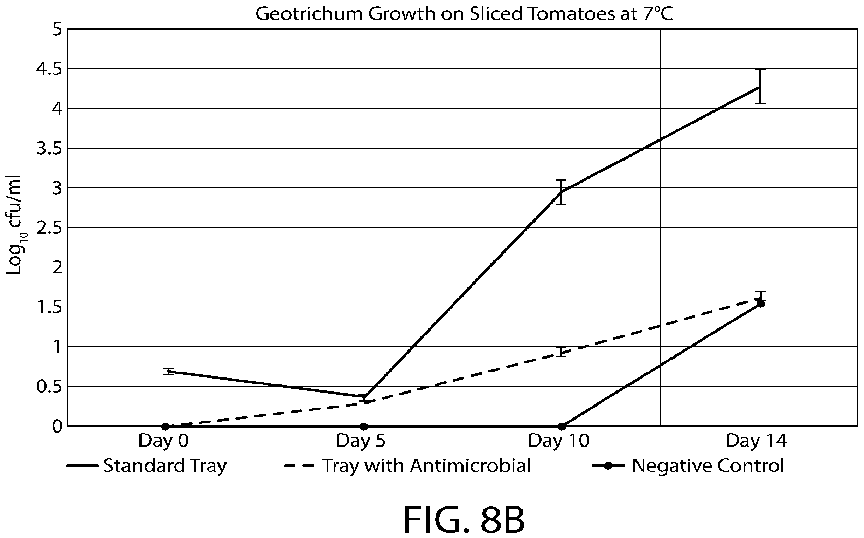

A package similar to that shown in FIG. 7, with the ClO₂-releasing antimicrobial film placed towards the top of the package, was used to store the contaminated sliced tomatoes. A second package, otherwise identical to the first except without the antimicrobial film, was used to store the contaminated sliced tomatoes. The results are provided on the graphs shown in FIGS. 8A and 8B. The results show conclusively that the antimicrobial film significantly inhibited growth of Geotrichum on the sliced tomatoes compared to the package without the film. In the package without the antimicrobial film, proliferation of Geotrichum on the sliced tomatoes was readily apparent to the naked eye. By contrast, the sliced tomatoes in the package with the entrained polymer ClO₂-releasing antimicrobial film appeared fresh, with no visible signs of Geotrichum growth. This is further notable given the suboptimal 7°C storage conditions for the day test.

It should be understood that examples on tomatoes were merely exemplary and that other produce and fresh foods (e.g., meat) may be used in accordance with the invention.

### Example 3 - Antimicrobial Film Location Testing

Entrained polymer film (X2597 film, described above) was placed in the headspace of a tray at various height positions on the sidewalls to test the effectiveness of various antimicrobial film locations/positions, as well as various sampling locations. The abbreviation "MCT" as used herein refers to Maxwell Chase Technologies, LLC of Atlanta, GA. The abbreviation "FPT" refers to FRESH-R-PAX^{®} trays of Maxwell Chase Technologies, LLC.

The following materials were used in this example:

| |
|---|
| 16 - 1 g X2597 Film Strips Lot #02116A030A (CSP Technologies -Auburn, AL). |
| 66 Tomatoes (5x5 red tomatoes purchased from grocery store the day of the experiment). |
| 24 MCT FPT 125D Trays (Maxwell Chase Technologies - Atlanta, GA) having a bottom surface and an opposite opening, with four sidewalls extending vertically from the bottom surface. The sidewalls had a length of 10" and height of 3 5"8 (measured from the bottom surface). |
| 24 plastic holders (Made from cut MCT FPT125D trays.) |
| Polypropylene (PP) lidding film approx. 50-gauge oriented polypropylene cast/ 1 mil. Cast Polypropylene (0.00152" thick) app. 90cc/100in²/day OTR, 0.8gm/100in²/day WVTR (MCT - Atlanta, GA) |
| MCT-MTS Manual Tray Sealer at 375°F (MCT Atlanta, GA). |
| SABER Tomato Hand-Slicer 7/32" slices (Prince Castle, Carol Stream, IL). |
| ATI C16 Portable Gas Analyzer (Analytical Technology Inc. Collegeville, PA). |
| ClO₂ Sensor #00-1425 1/5 (ATI Collegeville, PA). |
| ClO₂ Sensor #00-1004 1/5. |
| ClO₂ Sensor #00-1005 5/200. |
| ClO₂ Sensor #00-1359 200/2000. |
| Tempure Scientific Top Mount Laboratory Refrigerator (Model #LP-75-HG-TP) equipped with a Dixell XR40CX computer control set at 7°C temperature with high of 8°C and low of 6°C cooling setting. |
| 2 Sets of CPC #3438400 Quick-Disconnect Valves with compression fittings per mason jar (McMaster-Carr (MCM) #5012K122). |
| Flex^{®} GP 70 3/16" ID, ¼" OD black PVC tubing (MCM #5231K35). |
| 011 Buna-N O-ring, oil resistant, round profile (MCM #9408K41). |
| Xacto Knife. |

The MCT FPT125D (1/4 steam size, deep white polypropylene) trays were modified as follows. Three holes approximately 8.5 mm wide and 2 cm apart were made into the MCT FPT125D trays with an Xacto knife. Edges of the hole were cleaned and the CPC valves were screwed into the holes with an o-ring on both sides, and the compression fitting tightening down the 2 rings. Both valves were placed with QDV on the outside of the lid and container to allow for the automatic closing valves to be on the outside for sampling purposes.

Flex^{®} GP 70 3/16" ID, ¼" OD black PVC tubing (MCM#5231K35) was used on both intake and outtake ports of the C16 Portable Gas Analyzer, as well as the other end of the CPC #3438400 Quick-Disconnect Valves with compression fittings to connect to the trays to sample the headspace in the trays.

CSP film samples were cut from the same strip of film and same width. Then, each sample was weighed to 1.000 g and connected to a sidewall of the tray with a plastic piece to hold it in place. There were two samples in each tray, which resulted in 2 g of CSP film per tray. Each of the samples was connected to a different sidewall of the tray.

The tomatoes were sliced using the hand-slicer with the calyx facing down. The ends were discarded. About 7 slices of tomatoes were placed on the bottom surface of each tray.

The manual sealer was heated to 375°F, and each tray with tomatoes therein was placed on the respective sealing plate. Lidding/Sealing film was placed over the tray, the sealing handle was pressed down and held for approximately 1-2 seconds to cover/seal the tomatoes inside the tray.

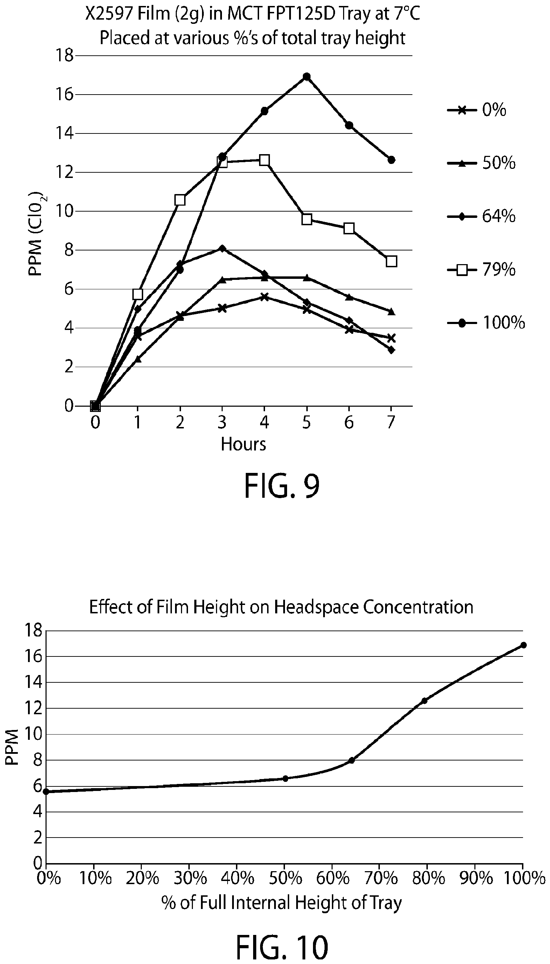

For each of the trays, the ClO₂ release rate was measured in one-hour intervals over an 11-hour period. FIG. 9 shows the release of ClO₂ (ppm) corresponding to various positions of the CSP film in the tray, i.e., at 0%, 50%, 64%, 79% and 100% height from the bottom surface based on total height of the sidewall. These respective heights are measured from the midline of the film. FIG. 10 shows the effect of the CSP film height on headspace concentration.

The results indicate that varying the height of the CSP film in the tray has an effect on the presence of ClO₂ in the headspace. From the bottom of the tray (0%) to the mid-point (50%-approximately 2 inches up the sidewall in this particular example), there was only a small, e.g., insignificant change in headspace concentration. However, from the mid-point to the top of the tray, the increase in height resulted in a significant increase in concentration. The concentration doubled from a position at 64% of the total height to the top of the tray (100%). The data indicates that in order to maximize the headspace concentration of ClO₂ for optimum effectiveness and/or to minimize the amount of film required, the placement of the film should be preferably in the top 20% of the tray, i.e., positioned at a vertical height that is 80% to 100% of the total height of the sidewall measured from the bottom surface, and should be placed at least at 64% of the total height of the sidewall of the tray.

### Example 4 - Use of Quick Burst Release Profiles to Kill Pathogens

The effectiveness of reducing the level of *Listeria monocytogenes, E. coli,* and *Salmonella,* was evaluated for CSP ClO₂ film applied to an upper portion of a tray as compared to control trays absent of the CSP ClO₂ film.

CSP ClO₂ emitting films, designated formulation X2597 (described above), at 0.3 mm thickness were used. This formulation was designed to have a fast ClO₂ release profile and did not use an overlying polyethylene layer to reduce the moisture uptake rate into the film. As described above, the X-2597 film is a formulation including 50% by weight of chlorine dioxide gas releasing agent, 38% by weight ethyl vinyl acetate (EVA) as a base polymer and 12% by weight polyethylene glycol (PEG) as a channeling agent. Trays with either 4 grams or 3 grams of film per tray were used. The tomatoes in the tray were each inoculated with three pathogens, i.e., *Listeria monocytogenes, E. Coli* and *Salmonella.*

The following materials were used in this example.

| |
|---|
| 250 Tomatoes-category 5x5 (extra for waste) (5 cases 50/ cases) |
| Tomato hand-slicer (Prince Castle) |
| Manual sealer set at 375°F(Maxwell Chase Tech.) |
| Polypropylene lidding film Approx. 90 OTR (Maxwell Chase Tech) |
| *Listeria monocytogenes* 5 strain cocktail inoculums (Food Isolates) |
| *Salmonella* 5 strain cocktail (Food Isolates) |
| *E. coli* O157:H7 5 strain cocktail (Food Isolates) |
| Sterile Dilution water and tubes |
| Sterile forceps |
| Alcohol beaker and flame for sterilizing forceps |
| Sterile surgical knives |
| 10 FPT 125D Trays (1/4 steam sized white polypropylene trays) w/ 1 g ClO₂ film on each upper corner |
| 10 FPT 125D Trays (1/4 steam sized white polypropylene trays) w/ 0.75 g ClO₂ film on each upper corner |
| 10 FPT 125D Trays (1/4 steam sized white polypropylene trays) designated -MCT |
| 4 Un-inoculated Trays designated - UN |
| Refrigerator set at 7°C |
| 564 MOX Plates (60 day 0. 168 days 5, 8, 12) designated - List. |
| 564 XLD plates (60 day 0. 168 days 5, 8, 12) designated -Sal. |
| 564 PCA plates (60 day 0. 168 days 5,8, 12) designated - APC |
| 564 MAC plates (60 day 0. 168 days 5,8, 12) designated - E. coli |
| Enrichment broth for corresponding pathogens |
| Extra plates for streak verification |

*Salmonella, Listeria monocytogenes, and E. Coli* O157:H7 5 strain cocktails were prepared, mixed and kept overnight. The target was to achieve a 5-log inoculation of each pathogen on the tomatoes. The inoculated tomatoes had 10⁹ CFU pathogen/ml inoculum. Inoculations were plated for verification and initial levels.

A solution of 200 ppm free chlorine solution was prepared using lukewarm water. The slicer was immersed in the solution for 2 min, and then rinsed with tap water.

A 200-ppm free chlorine solution was prepared using warm water (approximately the same temperature as for the tomatoes). The tomatoes were placed in tap water first, then the chlorine solution for 2 minutes, and rinsed with tap water. The tomatoes were sliced using the hand-slicer with the calyx facing down. The ends were discarded such that there were 42 slices packed into each tray (6 tomatoes by 7 slices/tomato).

Eighteen (18) tomato slices within each tray were spot inoculated with the *Salmonella, Listeria monocytogenes, and E. Coli* (6 each) inoculums to achieve a triplicate analysis in each tray. The 18 tomato slices selected were identified by marking each slice with a Sharpie adjacent to the area to be inoculated. The inoculum was vortexed and 10 µl of inoculum was quickly withdrawn with a sterile pipette tip and micropipetted onto the two slices marked at the top. This was repeated twice more per tray per pathogen.

The manual sealer was heated to 375°F. Each tray was placed on the sealing plate and the lidding film was pulled over the tray. The sealing handle was depressed and held in place for approximately 1-2 seconds. After sealing, each tray was checked to verify that the lidding film was fully attached to the tray.

The test trays were analyzed on days 0, 5, 8 and 12. For each tray, there were a total of three samples for each pathogen, three pathogens per tray and three APC (aerobic plate count) samples were taken from each tray. Each sample consisted of two slices taken using sterile forceps. The two slices were weighed into the sterile stomacher bag (weight was approximately 40-50 g) and three times the amount of sterile Peptone water was added. The tomatoes were stomached at 260 rpm for 1 minute. The necessary dilutions were then prepared (~3) from the homogenate and duplicate spread plated onto the corresponding PCA, MOX, SMAC, or XLD plates.

Data was calculated as colony forming units (CFU) per gram. CFU values were converted to log values for data analysis. Data was averaged per tray and per sample type. The following is a summary of the tests that were conducted on respective days. The term "CSP3" refers to trays using 3 g of X2597 film and the term "CSP4" refers to trays using 4 g of X2597 film.

Day 0: 1 MCT tray inoculated w/ 3 Salmonella, 3 E. Coli, 3 Listeria and 3 APC tests/tray = 12 tests; 1 CSP4 tray inoculated w/ 3 Salmonella, 3 E. Coli, 3 Listeria and 3 APC tests/tray = 12 tests; 1 CSP3 tray inoculated w/ 3 Salmonella, 3 E. Coli, 3 Listeria and 3 APC tests/tray = 12 tests; 1 UN tray not inoculated (Negative Control) x 4 tests (sal, E.coli,Lm,APC)/tray = 4 tests. Cumulatively, this was a total of 40 tests.

Day 5: 3 MCT tray inoculated w/ 3 Salmonella, 3 E. Coli, 3 Listeria and 3 APC tests/tray = 36 tests; 3 CSP4 tray inoculated w/ 3 Salmonella, 3 E. Coli, 3 Listeria and 3 APC tests/tray = 36 tests; 3 CSP3 tray inoculated w/ 3 Salmonella, 3 E. Coli, 3 Listeria and 3 APC tests/tray = 36 tests; 1 UN tray not inoculated (Negative Control) x 4 tests (sal, E.coli,Lm,APC)/tray = 4 tests. Cumulatively, this was a total of 112 tests.

Day 8: 3 MCT tray inoculated w/ 3 Salmonella, 3 E. Coli, 3 Listeria and 3 APC tests/tray = 36 tests; 3 CSP4 tray inoculated w/ 3 Salmonella, 3 E. Coli, 3 Listeria and 3 APC tests/tray = 36 tests; 3 CSP3 tray inoculated w/ 3 Salmonella, 3 E. Coli, 3 Listeria and 3 APC tests/tray = 36 tests; 1 UN tray not inoculated (Negative Control) x 4 tests (sal, E.coli,Lm,APC)/tray = 4 tests. Cumulatively, this was a total of 112 tests.

Day 12: 3 MCT tray inoculated w/ 3 Salmonella, 3 E. Coli, 3 Listeria and 3 APC tests/tray = 36 tests; 3 CSP4 tray inoculated w/ 3 Salmonella, 3 E. Coli, 3 Listeria and 3 APC tests/tray = 36 tests; 3 CSP3 tray inoculated w/ 3 Salmonella, 3 E. Coli, 3 Listeria and 3 APC tests/tray = 36 tests; 1 UN tray not inoculated (Negative Control) x 4 tests (sal, E.coli,Lm,APC)/tray = 4 tests. Cumulatively, this was a total of 112 tests.

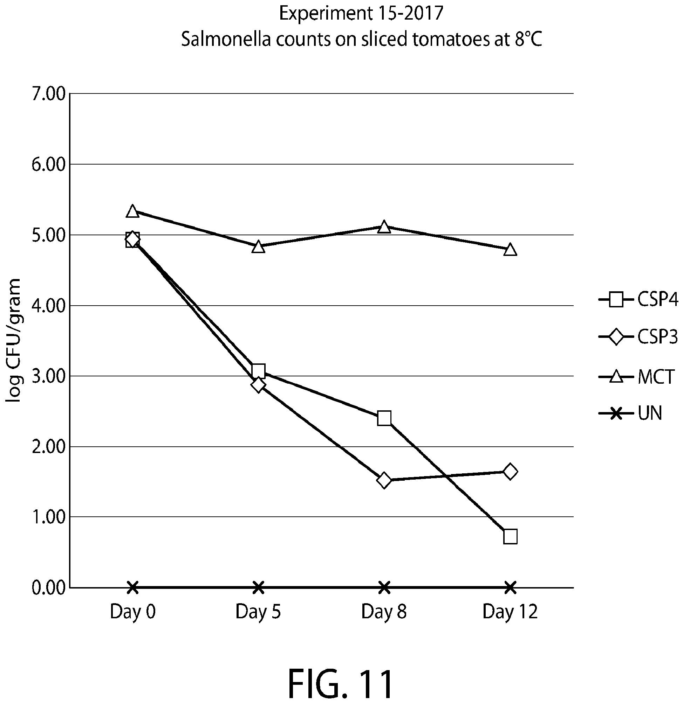

In all, this experiment cumulatively included a total of 376 tests (94 Salmonella, 94 E. Coli, 94 Listeria, 94 APC). Results are shown in FIGS. 11-13.

FIG. 11 shows that there was a decline in *Salmonella* after Day 0 and stayed in decline until day 12 for the CSP3 trays, and continued for the CSP4 trays. Each of these samples showed a reduction in *Salmonella* counts of at least 1.8 logs on day 5, 2.5 logs for day 8, and 3 logs for Day 12 respectively. This demonstrates a 99.9% reduction in *Salmonella* after 12 days in the CSP trays.

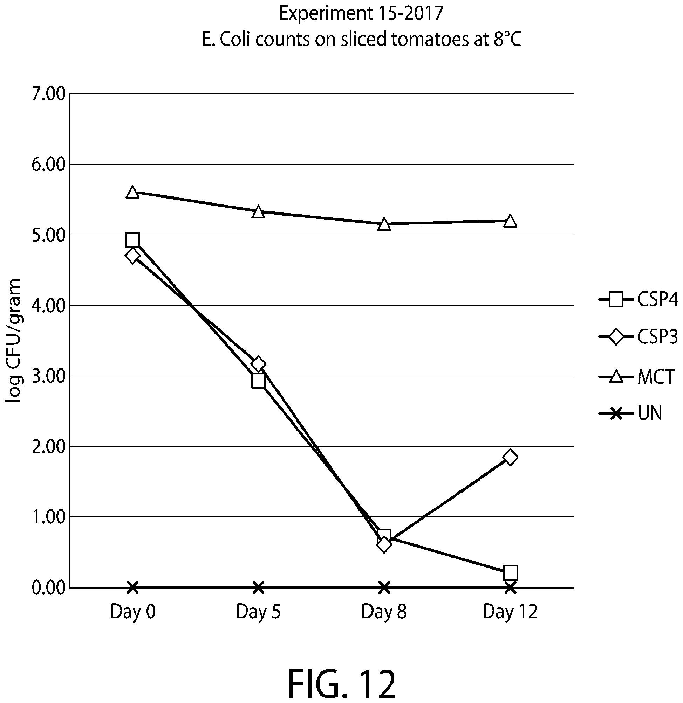

FIG. 12 shows results for *E*. *coli* that are similar to the *Salmonella* results. A decline in *E*. *coli* after Day 0 resulted in a reduction of at least 2 logs on day 5, 4 logs on day 8, and 3 logs on day 12. Similar to FIG. 11 for *Salmonella,* FIG. 12 shows an increase for the CSP3 tray on Day 12. It was determined that there was a 99.9% reduction in *E*. *coli* after a 12-day period.

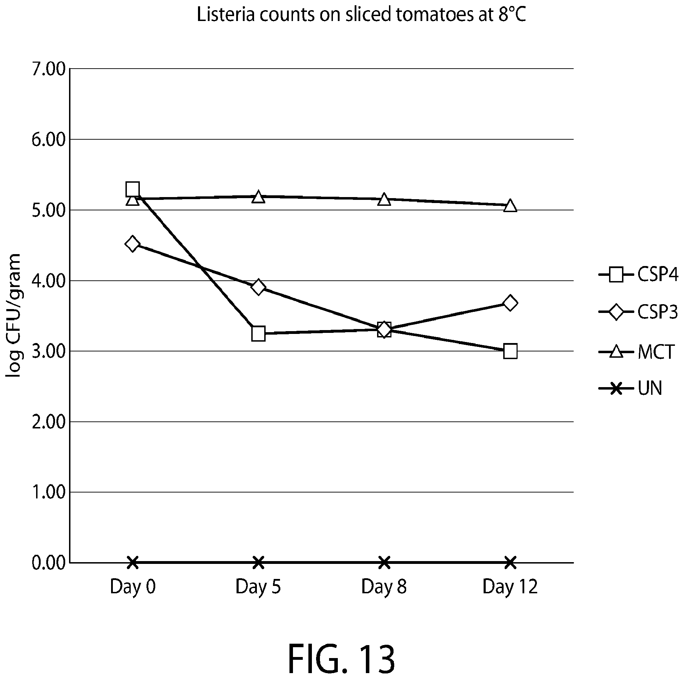

FIG. 13 shows that the CSP film also reduced *Listeria* by 1 log over 12 days of shelf life. This is consistent on every day samples were obtained, and demonstrated a 90% reduction of *Listeria monocytogenes* consistently for 12 days.

These results demonstrate the effectiveness of the CSP trays with sliced tomatoes over a 12-day storage period to reduce the amounts of *Salmonella, E. coli,* and *Listeria* inoculated on the tomato slices and stored at 8°C. This is not a normal storage condition, but it simulates potential abuse within the cold chain that is noted in food safety storage practices as being the major cause of spoilage and pathogen growth. The use of these trays can contribute to reducing the potential for pathogens growth to harmful levels in sliced tomatoes.

### Example 5 - Quick Burst Antimicrobial Gas Release Curves

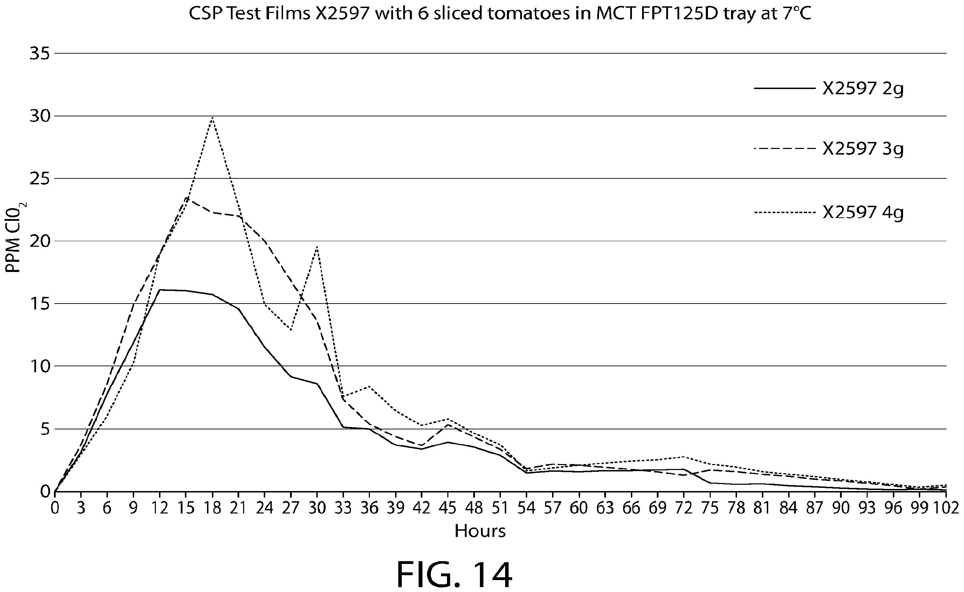

As described in Example 4, above, trays using 3 g or 4 g of X2597 film demonstrated significant activity in inhibiting pathogenic growth and proliferation over the testing period. The film formulations were configured to provide a quick burst release profile, as discussed elsewhere in this specification. FIG. 14 provides release curves for the 3 g and 4 g versions that were used in Example 4. FIG. 14 also provides a release curve for trays that used only 2 g of film.

As FIG. 14 shows, the trays using 4 g of film (CSP4) peaked at approximately 30 ppm of ClO₂ at about hour 18, while holding above 10 ppm between about hour 6 to hour 33. The trays using 3 g of film (CSP3) peaked at approximately 23 ppm of ClO₂ at about hour 15, while holding above 10 ppm between about hour 6 to hour 33. As stated above in Example 4, these embodiments provided sufficient headspace concentration to achieve a desired microbial kill and did so without bleaching the tomatoes.

FIG. 14 also shows a release curve for trays using 2 g of film. As the curve shows, that trays peaked at approximately 16 ppm of ClO₂ between hours 12 and 18. However, that curve shows that ClO₂ concentration only held above 10 ppm between about hours 8 to 26. In some circumstances, this concentration and release curve may provide sufficient antimicrobial effect, but in this instance, this concentration was not preferred.

## Claims

1. An entrained polymer, the entrained polymer comprising:
(a) a base polymer selected from polypropylene, polyethylene, polyisoprene, polybutadiene, polybutene, polysiloxane, polycarbonate, polyamide, ethylene-vinyl acetate copolymer, ethylene-methacrylate copolymer, poly(vinyl chloride), polystyrene, polyester, polyanhydride, polyacrylonitrile, polysulfone, polyacrylic ester, polyurethane, polyacetal, or a copolymer or mixture thereof;
(b) a channeling agent, wherein the entrained polymer features channels through the base polymer formed of the channeling agent, and wherein the channeling agent is a polyglycol, ethylene-vinyl alcohol (EVOH), polyvinyl alcohol (PVOH), glycerin polyamine, polyurethane, polycarboxylic acid, propylene oxide polymerisate-monobutyl ether, propylene oxide polymerisate, ethylene-vinyl acetate, nylon 6, nylon 66, or a combination thereof; and
(c) a chlorine dioxide gas releasing agent comprising an alkaline chlorite, wherein release of the chlorine dioxide gas is activated by contact of the entrained polymer with moisture.

2. The entrained polymer of claim 1, comprising:
(a) 10-50% by weight of the base polymer,
(b) 2-10% by weight of the channeling agent, and
(c) 40-70% by weight of the chlorine dioxide gas releasing agent.

3. The entrained polymer of claim 1 or claim 2, wherein the channeling agent is a polyethylene glycol (PEG), ethylene-vinyl alcohol (EVOH), polyvinyl alcohol (PVOH), glycerin polyamine, polyurethane, polycarboxylic acid, a propylene oxide polymerisate-monobutyl ether, a propylene oxide polymerisate monobutyl ether, propylene oxide polymerisate, ethylene vinyl acetate, nylon 6, nylon 66, or a combination thereof.

4. The entrained polymer of any previous claim, wherein the chlorine dioxide gas releasing agent further comprises a humidity trigger and/or a catalyst.

5. The entrained polymer of any previous claim formed into a pellet, a plug, a liner, a film or a sheet.

6. The entrained polymer of claim 5, wherein the entrained polymer is a film having a thickness of from 0.1 mm to 1.0 mm.

7. The entrained polymer of any previous claim, wherein the entrained polymer is formed into a packaging material or is a component of a packaging material.

8. The entrained polymer of claim 7, provided as a lid or a lidding film or as a component of a lid or a lidding film.

9. The entrained polymer of claim 7, provided as a component of a flexible bag made from polypropylene or polyethylene.

10. The entrained polymer of any previous claim, wherein the entrained polymer and/or the chlorine dioxide releasing agent is coated with at least one extended release coating or layer to effectuate a pre-determined release profile of the chlorine dioxide gas.

11. A container comprising the entrained polymer of any one of claims 1 to 10.

12. The container of claim 11, the container being closed and having therein chlorine dioxide gas generated by the entrained polymer.

13. The container of claim 12, wherein the container is for use in storing food.

14. A method of inhibiting or preventing growth of or killing microbes on a good in the interior space of a closed container, the method comprising the steps of:
(a) placing the good into the container, with a headspace being formed within the interior space that is not occupied by the good;
(b) providing an entrained polymer as defined in any one of claims 1 to 10; and
(c) contacting the entrained polymer with moisture to activate formation of the chlorine dioxide gas in the headspace at a concentration sufficient to inhibit, prevent or kill microbes on the good.

15. The method of claim 14, wherein the chlorine dioxide gas sterilizes the good.

16. The method of claim 15, wherein the good to be sterilized is a medical device.

## Patentansprüche

1. Beladenes Polymer, wobei das beladene Polymer Folgendes umfasst:
(a) ein Grundpolymer ausgewählt aus Polypropylen, Polyethylen, Polyisopren, Polybutadien, Polybuten, Polysiloxan, Polycarbonat, Polyamid, EthylenVinylacetat-Copolymer, Ethylen-Methacrylat-Copolymer, Poly(vinylchlorid), Polystyrol, Polyester, Polyanhydrid, Polyacrylnitril, Polysulfon, Polyacrylsäureester, Polyurethan, Polyacetal oder einem Copolymer oder einer Mischung davon,
(b) ein kanalbildendes Mittel, wobei das beladene Polymer vom kanalbildenden Mittel gebildete Kanäle durch das Grundpolymer aufweist und wobei es sich bei dem kanalbildenden Mittel um ein/eine Polyglykol, Ethylen-Vinylalkohol (EVOH), Polyvinylalkohol (PVOH), Glycerinpolyamin, Polyurethan, Polycarbonsäure, Propylenoxidpolymerisatmonobutylether, Propylenoxidpolymerisat, Ethylenvinylacetat, Nylon 6, Nylon 66 oder eine Kombination davon handelt, und
(c) ein Chlordioxidgas freisetzendes Mittel, das ein alkalisches Chlorit umfasst, wobei die Freisetzung des Chlordioxidgases durch Kontakt des beladenen Polymers mit Feuchtigkeit aktiviert wird.

2. Beladenes Polymer nach Anspruch 1, umfassend:
(a) 10-50 Gew.-% an Grundpolymer,
(b) 2-10 Gew.-% an kanalbildendem Mittel und
(c) 40-70 Gew.-% an Chlordioxidgas freisetzendem Mittel.

3. Beladenes Polymer nach Anspruch 1 oder Anspruch 2, wobei es sich bei dem kanalbildenden Mittel um ein/eine Polyethylenglykol (PEG), Ethylen-Vinylalkohol (EVOH), Polyvinylalkohol (PVOH), Glycerinpolyamin, Polyurethan, Polycarbonsäure, Propylenoxidpolymerisatmonobutylether, Propylenoxidpolymerisat, Ethylenvinylacetat, Nylon 6, Nylon 66 oder eine Kombination davon handelt.

4. Beladenes Polymer nach einem der vorhergehenden Ansprüche, wobei das Chlordioxidgas freisetzende Mittel weiterhin einen Feuchtigkeitsauslöser und/oder einen Katalysator umfasst.

5. Beladenes Polymer nach einem der vorhergehenden Ansprüche, geformt zu einem Pellet, einem Stopfen, einer Auskleidung, einer Folie oder einem Blatt.

6. Beladenes Polymer nach Anspruch 5, wobei es sich bei dem beladenen Polymer um eine Folie mit einer Dicke von 0,1 mm bis 1,0 mm handelt.

7. Beladenes Polymer nach einem der vorhergehenden Ansprüche, wobei das beladene Polymer zu einem Verpackungsmaterial geformt ist oder eine Komponente eines Verpackungsmaterials ist.

8. Beladenes Polymer nach Anspruch 7, bereitgestellt als ein Deckel oder eine deckelbildende Folie oder als eine Komponente eines Deckels oder einer deckelbildenden Folie.

9. Beladenes Polymer nach Anspruch 7, bereitgestellt als eine Komponente eines aus Polypropylen oder Polyethylen hergestellten flexiblen Beutels.

10. Beladenes Polymer nach einem der vorhergehenden Ansprüche, wobei das beladene Polymer und/oder das Chlordioxidgas freisetzende Mittel mit mindestens einer Beschichtung oder Schicht mit verlängerter Freisetzung beschichtet ist, um ein vorbestimmtes Freisetzungsprofil des Chlordioxidgases zu realisieren.

11. Behälter, umfassend das beladene Polymer nach einem der Ansprüche 1 bis 10.

12. Behälter nach Anspruch 11, wobei der Behälter geschlossen ist und sich darin durch das beladene Polymer erzeugtes Chlordioxidgas befindet.

13. Behälter nach Anspruch 12, wobei der Behälter für die Anwendung bei der Lagerung von Lebensmitteln bestimmt ist.

14. Verfahren zum Hemmen oder Verhindern des Wachstums von oder zum Abtöten von Mikroben auf einem Gut im Innenraum eines geschlossenen Behälters, wobei das Verfahren die folgenden Schritte umfasst:
(a) das Platzieren des Gutes in dem Behälter, wobei im Innenraum ein Kopfraum gebildet wird, der nicht von dem Gut eingenommen wird,
(b) die Bereitstellung eines wie in einem der Ansprüche 1 bis 10 definierten beladenen Polymers und
(c) das Inkontaktbringen des beladenen Polymers mit Feuchtigkeit zum Aktivieren der Bildung des Chlordioxidgases im Kopfraum in einer Konzentration, die ausreicht, um Mikroben auf dem Gut zu hemmen, zu verhindern oder abzutöten.

15. Verfahren nach Anspruch 14, wobei das Chlordioxidgas das Gut sterilisiert.

16. Verfahren nach Anspruch 15, wobei es sich bei dem zu sterilisierenden Gut um ein medizinisches Gerät handelt.

## Revendications

1. Polymère entraîné, le polymère entraîné comprenant :
(a) un polymère de base choisi parmi un polypropylène, un polyéthylène, un polyisoprène, polybutadiène, un polybutène, un polysiloxane, polycarbonate, un polyamide, un copolymère d'éthylène-acétate de vinyle, un copolymère d'éthylène-(méth)acrylate, un poly(chlorure de vinyle), un polystyrène, un polyester, un polyanhydride, un polyacrylonitrile, une polysulfone, un poly(ester acrylique), un polyuréthane, un polyacétal ou un copolymère ou un mélange correspondant ;
(b) un agent de canalisation, le polymère entraîné présentant des canaux à travers le polymère de base formés de l'agent de canalisation, et l'agent de canalisation étant un polyglycol, un éthylène-alcool vinylique (EVOH), un poly(alcool vinylique) (PVOH), une glycérine polyamine, un polyuréthane, un poly(acide carboxylique), un éther de monobutyle de polymérisat d'oxyde de propylène, un polymérisat d'oxyde de propylène, un éthylène-acétate de vinyle, un nylon 6, un nylon 66 ou une combinaison correspondante ; et
(c) un agent de libération de gaz de dioxyde de chlore comprenant un chlorite alcalin, la libération du gaz de dioxyde de chlore étant activée par contact du polymère entraîné avec de l'humidité.

2. Polymère entraîné selon la revendication 1, comprenant :
(a) 10 à 50 % en poids du polymère de base,
(b) 2 à 10 % en poids de l'agent de canalisation, et
(c) 40-70 % en poids de l'agent de libération de gaz de dioxyde de chlore.

3. Polymère entraîné selon la revendication 1 ou la revendication 2, l'agent de canalisation étant un polyéthylène glycol (PEG), un éthylène-alcool vinylique (EVOH), un poly(alcool vinylique) (PVOH), une glycérine polyamine, un polyuréthane, un poly(acide carboxylique), un éther de monobutyle de polymérisat d'oxyde de propylène, un polymérisat d'oxyde de propylène, un éthylène-acétate de vinyle, un nylon 6, un nylon 66 ou une combinaison correspondante.

4. Polymère entraîné selon une quelconque revendication précédente, l'agent de libération de gaz de dioxyde de chlore comprenant un déclencheur d'humidité et/ou un catalyseur.

5. Polymère entraîné selon une quelconque revendication précédente mis en forme en une pastille, un bouchon, une garniture, un film ou une feuille.

6. Polymère entraîné selon la revendication 5, le polymère entraîné étant un film ayant une épaisseur allant de 0,1 mm à 1 mm.

7. Polymère entraîné selon la revendication 5, le polymère entraîné étant mis en forme en un matériau d'emballage ou étant un composant d'un matériau d'emballage.

8. Polymère entraîné selon la revendication 7, fourni comme un couvercle ou un film de fermeture ou comme un composant d'un couvercle ou d'un film de fermeture.

9. Polymère entraîné selon la revendication 7, fourni comme un composant d'un sac flexible composé de polypropylène ou de polyéthylène.

10. Polymère entraîné selon une quelconque revendication précédente, le polymère entraîné et/ou l'agent de libération de dioxyde de chlore étant revêtu par au moins un revêtement ou une couche de libération prolongée pour effectuer un profil de libération prédéterminé du gaz de dioxyde de chlore.

11. Récipient comprenant le polymère entraîné selon l'une quelconque des revendications 1 à 10.

12. Récipient selon la revendication 11, le récipient étant fermé et ayant dans celui-ci du gaz de dioxyde de chlore généré par le polymère entraîné.

13. Récipient selon la revendication 12, le récipient étant pour une utilisation dans le stockage d'un produit alimentaire.

14. Procédé d'inhibition ou de prévention de la croissance de microbes, ou de destruction de microbes sur un produit dans l'espace intérieur d'un récipient fermé, le procédé comprenant les étapes de :
(a) placement du produit dans le récipient, avec un espace de tête formé dans l'espace intérieur qui n'est pas occupé par le produit ;
(b) fourniture d'un polymère entraîné tel que défini dans l'une quelconque des revendications 1 à 10 ; et
(c) mise en contact du polymère entraîné avec de l'humidité pour activer la formation du gaz de dioxyde de chlore dans l'espace de tête à raison d'une concentration suffisante pour inhiber, empêcher ou détruire des microbes sur le produit.

15. Procédé selon la revendication 14, le gaz de dioxyde de chlore stérilisant le produit.

16. Procédé selon la revendication 15, le produit devant être stérilisé étant un dispositif médical.
